# EUROPÄISCHE PATENTSCHRIFT

(11) **EP 3 571 085 B1**
(45) Veröffentlichungstag und Bekanntmachung des Hinweises auf die Patenterteilung: **19.04.2023**
(21) Anmeldenummer: 17800492.5
(22) Anmeldetag: 14.11.2017
(51) Int. Cl.: B60K 37/06

(54) **VERFAHREN UND VORRICHTUNG ZUM ANZEIGEN EINES HINWEISES FÜR EINEN ANWENDER UND ARBEITSVORRICHTUNG**
METHOD AND DEVICE FOR DISPLAYING A NOTIFICATION FOR A USER AND WORKING DEVICE
PROCÉDÉ ET DISPOSITIF PERMETTANT D'AFFICHER UNE INDICATION POUR UN UTILISATEUR ET DISPOSITIF DE TRAVAIL

(30) Priorität: 20.01.2017 DE 102017200915
(43) Veröffentlichungstag der Anmeldung: 27.11.2019
(73) Patentinhaber: Bayerische Motoren Werke Aktiengesellschaft, 80809 München (DE)
(72) Erfinder: MÜLLER-ALBRECHT, Christoph, 82319 Starnberg (DE); CARAZO, Miriam, 85051 Ingolstadt (DE); STILLING, Bernd, 81379 München (DE)
(86) Internationale Anmeldenummer: PCT/EP2017/079097
(87) Internationale Veröffentlichungsnummer: WO 2018/133970

(56) Entgegenhaltungen:
- EP-A1- 2 779 151
- EP-A1- 3 405 942
- DE-A1-102011 054 823
- DE-A1-102013 012 679
- DE-B4-112013 006 557
- JP-A- 2012 189 762
- KR-A- 20100 111 536
- US-A1- 2012 036 418

## Beschreibung

Die vorliegende Erfindung betrifft ein Verfahren und eine Vorrichtung zum Anzeigen eines Hinweises für einen Anwender sowie eine Arbeitsvorrichtung. Insbesondere betrifft die vorliegende Erfindung die zuverlässige Darstellung von sicherheitstechnisch relevanten Inhalten im Zusammenhang mit komplexen informationstechnischen Vorrichtungen sowie ein Fahrzeug.

Die Sicherheitsanforderungen in der Automobilindustrie aber auch im Zusammenhang mit anderen Arbeitsvorrichtungen gewinnen zunehmend an Bedeutung. Um für diverse Produkte größtmögliche Sicherheit zu gewährleisten, sind bestimmte Normen (z.B. ISO 26262) zum Beispiel für elektrische oder elektronische Systeme in Kraftfahrzeugen eingeführt worden. Durch das Einhalten dieser Normen sollen Fehlfunktionen elektrischer oder elektronischer Komponenten in einem Kraftfahrzeug minimiert werden.

Für die Unterscheidung sicherheitsrelevanter Aspekte wurde die Klassifizierung nach dem ASIL-Konzept (ASIL : Automotive Safety Integrity Level) eingeführt. Diese Klassifizierung erfolgt in Abstufungen von A bis D, wobei ASIL D die höchsten Anforderungen an die Absicherung der Systeme stellt.

Zu einer Gruppe sicherheitsrelevanter Systeme oder Meldungen gehören zum Beispiel Gefahrenmeldungen, welche über ein Kombiinstrument und/oder eine andere Anzeige innerhalb eines Fahrzeugs an einen Fahrer als Anwender ausgegeben werden. Diese Meldungen werden auch als Check-Control-Messages (CCM) bezeichnet und beinhalten zum Beispiel einen Text und/oder ein Symbol.

Im Zusammenhang mit den steigenden Sicherheitsanforderungen gilt es sicherzustellen, dass zumindest die sicherheitsrelevanten Meldungen zuverlässig und innerhalb der hierfür spezifizierten Zeitspanne fehlerfrei angezeigt werden.

Die Druckschrift JP 2012 189 762 A beschreibt eine elektrophoretische Anzeigevorrichtung, bei welcher verhindert wird, dass elektrophoretische Partikel bei hoher Temperatur anhaften, und welche eine Anzeige mit hohem Kontrast ausführt. Die elektrophoretische Anzeigevorrichtung umfasst Anzeigemittel, Temperaturerfassungsmittel zum Erfassen der Benutzungsumgebungstemperatur und eine Steuereinrichtung zum Steuern einer Anzeige der Anzeigeeinrichtung. Die Steuereinrichtung schaltet zwischen Anzeigemodi der Anzeigeeinrichtung um, insbesondere zwischen einem ersten Modus zum Ausführen einer normalen Anzeige, einem zweiten Modus zum Ausführen einer Hochtemperaturalarmanzeige und einem dritten Modus zum abwechselnden Ausführen einer Einfarbenanzeige einer ersten Farbe und einer zweiten Farbe.

Die KR 2010 0111536 A offenbart ein Bildinspektionsverfahren der Oberfläche eines Ziels unter Verwendung eines Varianzberechnungsalgorithmus der Oberflächenleuchtdichteverteilung, der bereitgestellt wird, um zu ermöglichen, dass die Fehlerbestimmung durch Eliminieren eines lokalen Bildfehlers von einem Oberflächenbild genau durchgeführt wird. Ein Oberflächenbild wird aufgeteilt, um es jedem Pixel zuzuordnen. Eine erste Varianz wird berechnet, bei der ein Zeilenvarianzsatz und ein Spaltenvarianzsatz für jedes Ziel berechnet werden. Eine zweite Varianz wird berechnet, bei der die gesamten Zeilenvarianzen und die gesamten Spaltenvarianzen für jedes Ziel berechnet werden. Aus den gesamten Zeilenvarianzen und den gesamten Spaltenvarianzen wird bestimmt, ob jedes Target die Defekte umfasst. Ein Endwert, der der Durchschnitt des Zeilenwerts und des Spaltenwerts eines Ziels ist, wird berechnet. Wenn der Endwert kleiner als ein Schwellenwert ist, wird bestimmt, dass das Ziel die Defekte nicht aufweist.

Die EP 2 779 151 A1 betrifft einen Dokument D2 offenbart einen Videoausgangsprüfer, der so konfiguriert ist, dass er eingehende Videodaten empfängt, um ein Bild auf einer Anzeige wiederzugeben. Die Videodaten umfassen Pixeldaten, die für jedes Pixel einen Satz von Farbkomponentenwerten für ein gegebenes Farbmodell umfassen. Der Videoausgabeprüfer kann so konfiguriert werden, dass er jede Farbkomponente für ein Pixel in einem ausgewählten Bereich des Bildes mit einem entsprechenden Testbereich von Werten vergleicht und, wenn ein Komponentenwert außerhalb des Bereichs liegt, eine Abweichung misst. Der Videoausgangsprüfer kann so konfiguriert werden, dass er Abweichungen für den ausgewählten Bereich summiert, um einen Fehlerwert für den ausgewählten Bereich bereitzustellen, und den Fehlerwert mit einer Schwellenwertzahl vergleicht. Zusätzlich oder alternativ kann der Videoausgangsprüfer konfiguriert sein, um zu bestimmen, ob jede Farbkomponente für ein Pixel in einem ausgewählten Bereich des Bildes in einen entsprechenden Testbereich von Werten fällt, um zu bestimmen, ob das Pixel gültig oder ungültig ist, und um zu zählen Anzahl gültiger oder ungültiger Pixel im ausgewählten Bereich. Der Videoausgabeprüfer ist so konfiguriert, dass er die Anzahl gültiger oder ungültiger Pixel mit einer Schwellenzahl vergleicht. Die EP 3 405 942 A1 zeigt ein Verfahren zum Überprüfen einer Gültigkeit von Bilddaten, wobei die Bilddaten Pixeln von Bildpunkten einer Anzeigevorrichtung zugeordnet sind, wobei jeweils mindestens ein Bilddatum jedes Pixels einer Auswahl der Pixel für eine Bildung eines Prüfwerts herangezogen wird, wobei der gebildete Prüfwert mit einem gespeicherten Prüfwert verglichen wird und wobei eine Gültigkeit der Bilddaten nur dann festgestellt wird, wenn der ermittelte und der gespeicherte Prüfwert übereinstimmen, wobei für die Bildung des Prüfwerts mindestens ein Bilddatum mindestens eines der Pixel der Auswahl nicht berücksichtigt wird.

Die US 2012 / 036 418 A1 eine Instrumententafel, die so konfiguriert ist, dass sie geeignet prüft, ob die Datenanzeige normal ist oder nicht. Eine Anzeigesteuervorrichtung umfasst eine Anzeigeausgabesteuereinheit und eine CPU. Die Anzeigeausgabesteuereinheit enthält eine Vergleichssteuereinheit, die eine zyklische Redundanzprüfung über einem beliebigen Bereich von Bilddaten durchführt. Die Vergleichssteuereinheit enthält eine Bereichssteuereinheit, die einen Bereich der Bilddaten basierend auf Vergleichsbereichsinformationen zum Spezifizieren eines beliebigen Bereichs des auf der Anzeigeeinheit angezeigten Bilds als Zielbereich für die zyklische Redundanzprüfung auswählt, eine arithmetische Verarbeitungseinheit, die Arithmetik durchführt Verarbeitung für die zyklische Redundanzprüfung über einem von der Bereichssteuereinheit ausgewählten Bereich, und eine Vergleichsschaltung, die eine Fehlererkennung durch Vergleichen des Ergebnisses der arithmetischen Verarbeitung durch die arithmetische Verarbeitungseinheit mit ihrem erwarteten Wert durchführt. Eine Fehlererkennung durch die zyklische Redundanzprüfung wird nur an dem Zielbereich der zyklischen Redundanzprüfung in dem beliebigen Bereich durchgeführt, was die zyklische Redundanzprüfung erleichtert.

Die DE 10 2013 012 679 A1 offenbart ein Verfahren und eine Vorrichtung zur Darstellung eines sicherheitsrelevanten Zustands. Ein Rechner erstellt einen Bilddatenstrom mit Darstellungswerten unter Berücksichtigung von Zustandsinformation Eine Anzeige stellt ein Bild durch Ansteuern von Bildpunkten anhand der Darstellungswerte dar. Zwecks rechentechnischer Sicherheitsprüfung wird der Bilddatenstrom einer Prüfeinheit zugeführt. Ein für alle Bildpunkte eines Überwachungsbereichs geltender Referenzwert wird in der Prüfeinheit gespeichert. Diese führt eine Prüfsequenz durch, wobei jeweils nacheinander für jeden Bildpunkt einer Auswahl aus dem Überwachungsbereich, eine Vergleichsoperation zwischen einem Darstellungswert des Bildpunkts und dem Referenzwert durchgeführt wird und daraus ein Vergleichsergebnis gebildet wird, welches zum Bestimmen einer Ergebnisvariable berücksichtigt wird. Nach erfolgter Prüfsequenz wird die Ergebnisvariable mit einem Schwellwert verglichen zur Bildung eines positiven oder negativen Prüfergebnisses.

Der Erfindung liegt die Aufgabe zu Grunde, eine Vorrichtung und ein Verfahren zum Anzeigen eines Hinweises für einen Anwender und eine damit im Zusammenhang stehende Arbeitsvorrichtung zu schaffen, bei welchen mit einfachen Mitteln ein besonders hohes Maß an Zuverlässigkeit bei der Anzeige sicherheitsrelevanter Hinweise erreicht wird.

Die der Erfindung zu Grunde liegende Aufgabe wird bei einem Verfahren zum Anzeigen eines Hinweises für einen Anwender erfindungsgemäß mit den Merkmalen des unabhängigen Patentanspruchs 1, bei einer Vorrichtung zum Anzeigen eines Hinweises erfindungsgemäß mit den Merkmalen des unabhängigen Anspruchs 9 sowie bei einer Arbeitsvorrichtung und insbesondere bei einem Fahrzeug erfindungsgemäß mit den Merkmalen des unabhängigen Patentanspruchs 10 gelöst. Vorteilhafte Weiterbildungen sind jeweils Gegenstand der abhängigen Ansprüche.

Gemäß einem ersten Aspekt der vorliegenden Erfindung wird ein Verfahren zum Anzeigen eines Hinweises für einen Anwender geschaffen, bei welchem
(i) in einem ersten oder normalen Anzeigemodus dem Hinweis zugeordnete erste Bilddaten auf einer Anzeigeeinheit angezeigt werden,
(ii) in einem zweiten oder Sicherheitsanzeigemodus dem Hinweis zugeordnete zweite Bilddaten auf einer und insbesondere derselben Anzeigeeinheit angezeigt werden, sobald im normalen Anzeigemodus eine vorbestimmte Fehlerbedingung erfüllt ist, und
(iii) die Erfüllung der vorbestimmten Fehlerbedingung geprüft wird, indem eine aktuelle Anzeige der ersten Bilddaten durch die Anzeigeeinheit im normalen Anzeigemodus auf das Vorliegen von Bildfehlern mit einer Referenzanzeige der ersten Bilddaten durch die Anzeigeeinheit im normalen Anzeigemodus verglichen wird.

Ferner werden erfindungsgemäß zum Vergleichen die aktuelle Anzeige und die Referenzanzeige in Bereiche und/oder Pixel unterteilt, welche Klassen als Hintergrund, Vordergrund, Bildkante und/oder irrelevant zugeordnet werden. Für jede Klasse werden Farbwertintervalle und/oder Farbschwellenwerte festgelegt, insbesondere auf der Grundlage eines RGB-Schemas. Für jeden Bereich und/oder für jedes Pixel und für jede Klasse wird eine Lage innerhalb oder außerhalb der Farbwertintervalle und/oder Farbschwellenwerte ermittelt. Bei einer Lage außerhalb der Farbwertintervalle und/oder Farbschwellenwerte wird auf einen Bildfehler erkannt.

Ein Kernaspekt der vorliegenden Erfindung besteht also im Detektieren eines Vorliegens oder Nichtvorliegens einer vorbestimmten Fehlerbedingung im Zusammenhang mit der Anzeige und in einem sich daran orientierenden bedingten Wechsel des Anzeigemodus. Durch diese Maßnahmen kann beim Auftreten eines Anzeigefehlers unmittelbar reagiert und der Anzeigemodus gewechselt werden, so dass sicherheitsrelevante Aspekte dem Anwender weiterhin als Hinweis angezeigt werden können.

Ein weiterer Kernaspekt der Erfindung ist der fehlertolerante Bildvergleich, der einen Vorteil gegenüber bekannten Bildprüfungen mittels Prüfsummen mit sich bringt. Der Wechsel von einem normalen Anzeigemodus zu einem Sicherheitsanzeigemodus im Fehlerfall ist als Fehlerreaktion essentiell.

Grundsätzlich bestehen verschiedene Möglichkeiten, eine aktuelle Anzeige und eine Referenzanzeige miteinander zu vergleichen. Ein besonders hohes Maß an Zuverlässigkeit ergibt sich, wenn das Vergleichen mit der Referenzanzeige erfolgt, indem der aktuelle Inhalt eines Bildspeichers der Anzeigeeinheit zur aktuellen Anzeige ausgelesen und mit dem Inhalt des Bildspeichers der Anzeigeeinheit zur Referenzanzeige verglichen wird.

Auch bieten sich unterschiedliche Analyseparameter zur Untersuchung der aktuellen Anzeige und der Referenzanzeige an.

Bereiche und/oder Pixel, die als irrelevant klassifiziert sind, können vom oben beschriebenen Vergleich ausgeschlossen sein oder werden.

Grundsätzlich können verschiedene Szenarien dazu führen, auf das Vorliegen einer Fehlerbedingung zu erkennen.

Bei einer besonders bevorzugten Ausgestaltungsform des erfindungsgemäßen Verfahrens ist die vorbestimmte Fehlerbedingung erfüllt, wenn die Anzahl der Bildfehler der aktuellen Anzeige im Vergleich zur jeweiligen Referenzanzeige einen vorgegebenen Schwellenwert überschreitet.

Dies kann insbesondere mit einer vorbestimmten Mindestzeitspanne in Zusammenhang gebracht werden. Das bedeutet, dass auf das Vorliegen eines Fehlers erst dann erkannt wird, wenn die Fehlerbedingung mindestens für eine Mindestzeitspanne andauert und insbesondere darüber hinaus vorliegt.

Bei einer vorteilhaften Weiterbildung können der Schwellenwert und/oder die Mindestzeitspanne dynamisch und/oder in Abhängigkeit vom Hinweis und/oder dessen Kontext, von den ersten Bilddaten, von einer Anzeigeposition und/oder von der Anzeigeeinheit festgelegt sein oder werden. Es können auch beliebige andere Abhängigkeiten zur Festlegung des Schwellenwerts und/oder der Mindestzeitspanne vorgesehen werden.

Es ist denkbar, die verschiedenen Anzeigemodi im Zusammenhang mit voneinander getrennten Anzeigebereichen oder gar Anzeigeeinrichtungen zu realisieren.

Besonders einfache Verhältnisse auch im Hinblick auf die Sehgewohnheiten des Anwenders stellen sich ein, wenn auf der Grundlage einer anderen vorteilhaften Weiterbildung des erfindungsgemäßen Verfahrens ein Wechseln zwischen dem normalen Anzeigemodus und dem Sicherheitsanzeigemodus durch bereichsweises oder vollständiges Überblenden zwischen den Anzeigen der ersten und der zweiten Bilddaten erfolgt, insbesondere auf einer normalen Anzeigeschicht oder -schnittstelle bzw. einer Sicherheitsanzeigeschicht oder - schnittstelle und/oder nach Art einer kombinierten Anzeige, zum Beispiel durch Überblenden und/oder Blitten.

Die Zuverlässigkeit des erfindungsgemäßen Verfahrens zum Anzeigen eines Hinweises lässt sich weiter steigern, indem die ersten Bilddaten für den normalen Anzeigemodus eine höhere graphische und/oder Bildkomplexität aufweisen als die zweiten Bilddaten für den Sicherheitsanzeigemodus, insbesondere hinsichtlich der Farbwerte und/oder der Weite der jeweiligen Wertebereiche der Farbwerte.

Bei einer anderen Weiterbildung des erfindungsgemäßen Verfahrens ist es vorgesehen, dass der normale Anzeigemodus im Zusammenhang mit einer normalen Grafikschnittstelle und der Sicherheitsanzeigemodus über eine Sicherheitsschnittstelle realisiert werden, wobei Referenzanzeigen in der oder im Zusammenhang mit der Sicherheitsschnittstelle generiert und/oder gespeichert werden.

Alternativ oder zusätzlich kann es vorgesehen sein, dass die Größe und/oder die Position einer oder mehrerer Anzeigeregionen für eine Anzeige vom oder im Zusammenhang mit dem normalen Anzeigemodus und insbesondere von der oder im Zusammenhang mit der normalen Grafikschnittstelle festgelegt werden.

Zwar bieten sich unterschiedliche Anwendungsmöglichkeiten des erfindungsgemäßen Verfahrens an. Von besonderer Bedeutung ist das erfindungsgemäße Vorgehen jedoch im Zusammenhang mit Hinweisen, welche als Hinweise sicherheitsrelevante Informationen in Bezug auf den Betrieb einer zu Grunde liegenden Arbeitsvorrichtung und insbesondere eines Fahrzeugs anzeigen und insbesondere im Zusammenhang mit einem Betriebs- oder Fahrmodus, einer Normalfunktion und/oder einer Fehlfunktion einer Komponente und/oder einem Betriebs- oder Fahrparameter.

Gemäß einem weiteren Aspekt der vorliegenden Erfindung wird eine Vorrichtung zum Anzeigen eines Hinweises geschaffen. Die erfindungsgemäße Vorrichtung weist eine Anzeigeeinheit auf, welche zum gesteuerten Anzeigen des Hinweises oder damit im Zusammenhang stehender erster und/oder zweiter Bilddaten ausgebildet ist. Des Weiteren ist eine Steuereinrichtung zum Steuern der Anzeige der oder durch die Anzeigeeinheit auf der Grundlage des erfindungsgemäßen Verfahrens zum Anzeigen eines Hinweises ausgebildet.

Ferner schafft die vorliegende Erfindung eine Arbeitsvorrichtung und insbesondere ein Fahrzeug. Die Arbeitsvorrichtung ist mit der erfindungsgemäßen Vorrichtung zum Anzeigen eines Hinweises ausgestattet.

Weitere Einzelheiten, Merkmale und Vorteile der Erfindung ergeben sich aus der nachfolgenden Beschreibung und den Figuren.
- Figur 1: zeigt eine schematische Seitenansicht eines Ausführungsbeispiels eines erfindungsgemäßen Fahrzeugs als Arbeitsvorrichtung mit einem Ausführungsbeispiel einer erfindungsgemäßen Vorrichtung zum Anzeigen eines Hinweises.
- Figur 2: erläutert in schematischer Darstellung Möglichkeiten der Charakterisierung eines Bildbereichs einer Anzeige nach Art eines Bildvergleichers.
- Figur 3: zeigt nach Art eines Blockdiagramms den Aufbau einer erfindungsgemäßen Anzeigeeinheit im Zusammenhang mit einer erfindungsgemäßen Vorrichtung, und zwar nach Art einer Anwenderschnittstelle.
- Figur 4: erläutert nach Art eines Blockdiagramms eine Ausführungsform des erfindungsgemäßen Verfahrens im Zusammenhang mit einem Zustandsautomaten.

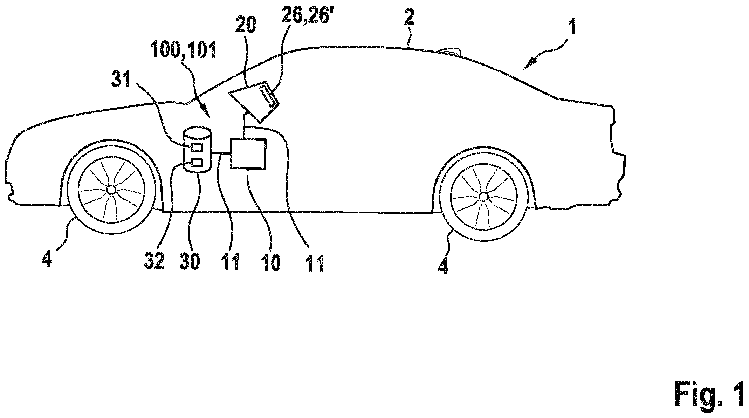

Nachfolgend werden unter Bezugnahme auf die Figuren 1 bis 4 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt eine schematische Seitenansicht eines Ausführungsbeispiels eines erfindungsgemäßen Fahrzeugs 1 als Arbeitsvorrichtung mit einem Ausführungsbeispiel einer erfindungsgemäßen Vorrichtung zum Anzeigen eines Hinweises.

Das erfindungsgemäße Fahrzeug 1 ist in Figur 1 als Personenkraftwagen ausgestaltet und weist eine Karosserie 2 und über einen hier nicht dargestellten Antrieb antreibbare Räder 4 auf. Zur Information eines Anwenders des Fahrzeuges 1 im Hinblick auf sicherheitsrelevante Informationen, zum Beispiel im Hinblick auf den Zustand oder Betrieb des Fahrzeugs 1, weist das erfindungsgemäße Fahrzeug 1 eine Ausführungsform der erfindungsgemäßen Vorrichtung 100 zum Anzeigen eines Hinweises auf, welche auch als Schnittstelle 101 und insbesondere als Anwenderschnittstelle aufgefasst werden kann und dazu entsprechende Hardware- und/oder Softwarekomponenten aufweist.

Die Vorrichtung 100 als Anwenderschnittstelle 101 weist eine Anzeigeeinheit 20 zur Anzeige von Hinweisen und mit den Hinweisen im Zusammenhang stehenden ersten und zweiten Bilddaten 31 und 32 auf, die über eine Steuerleitung 11 mit einer Erfassungs- und Steuereinheit 10 und mittelbar über diese mit einer Speichereinheit 30 verbunden ist. Die Speichereinheit 30 selbst ist eingerichtet, die entsprechenden ersten und zweiten Bilddaten 31 bzw. 32 für verschiedene Hinweise, insbesondere mit Sicherheitsrelevanz, zu speichern, um diese über die Steuerleitung 11 durch Abruf mittels der Erfassungs- und Steuereinheit 10 an die eigentliche Anzeigeeinheit 20 zur Anzeige 26, 26' zu übertragen.

Die bereits dargelegt wurde, kommen bei der Anzeige 26 in einem ersten oder normalen Anzeigemodus erste Bilddaten 31 und in einem zweiten oder Sicherheitsanzeigemodus zweite Bildraten 32 zur Anzeige des sicherheitsrelevanten Hinweises zum Tragen.

Dazu muss im Hinblick auf eine bestehende Anzeige 26 ermittelt werden, ob eine Fehlerbedingung für einen Wechsel vom normalen Anzeigemodus zum Sicherheitsanzeigemodus vorliegt oder nicht.

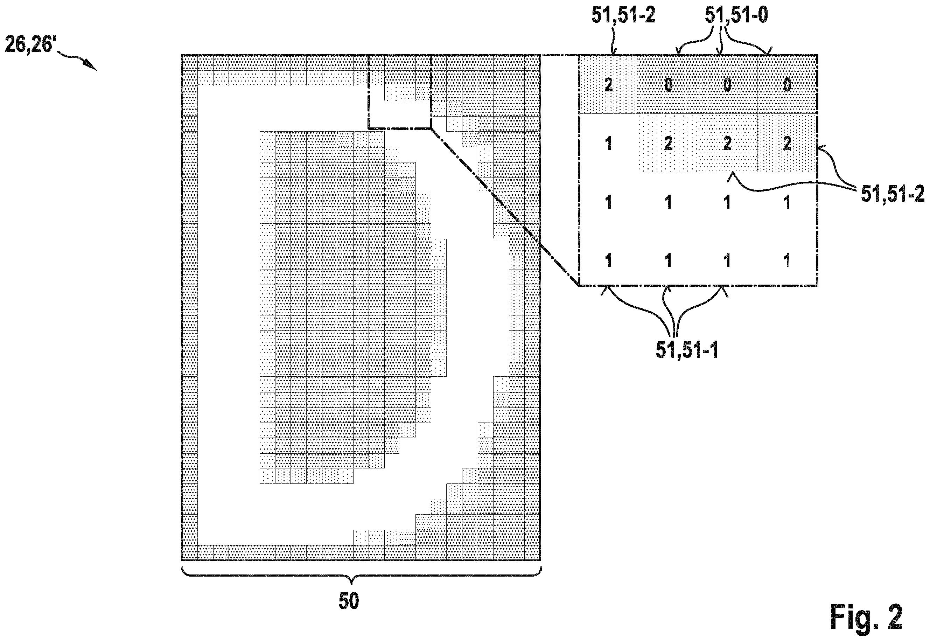

Dazu werden Bildbereiche 50 der Anzeige 26 und der damit in Beziehung zu setzenden Referenzanzeige 26` im Hinblick auf Bildelemente 51, die auch als Pixel bezeichnet werden, analysiert und in verschiedene Klassen unterteilt, zum Beispiel in Klassen 51-0 bis 51-3 mit der Bedeutung 51-0 Hintergrund, 51-1 Vordergrund, 51-2 Kantenbereich und 51-3 irrelevant. Dies ist schematisch in Figur 2 dargestellt.

Figur 2 erläutert Möglichkeiten der Charakterisierung eines Bildbereichs 50 einer Anzeige 26 oder einer Referenzanzeige 26`, insbesondere nach Art eines Bildvergleichers, der auch als Image-Matcher oder IM bezeichnet wird.

Dabei werden entsprechende Bildbereiche 50 für eine aktuelle Anzeige 26 und für eine Referenzanzeige 26' bildelementweise, insbesondere pixelweise, miteinander verglichen. Abweichungen werden als Bildfehler gezählt, wenn zum Beispiel Farbwerte der einzelnen Pixel außerhalb zugeordneter Farbwertebereiche oder Schwellenwerte liegen.

Vorliegende Bildelementfehler oder Pixelfehler werden pro Bildbereich 50 oder für die Anzeige 26 insgesamt in ihrer Anzahl aufsummiert. Die Summe wird gegebenenfalls mit einem Schwellenwert verglichen, wobei auf das Vorliegen einer Fehlerbedingung erkannt wird, wenn der Schwellenwert überschritten ist.

Zusätzlich kann eine zeitliche Randbedingung gestellt werden, so dass beim Überschreiten des Schwellenwerts auf das Vorliegen einer Fehlerbedingung erst dann erkannt wird, wenn der Schwellenwert für eine Mindestzeitspanne fortbesteht. Diese wird auch als Fehlertoleranzzeit, Fault-Tolerance-Time oder FTT bezeichnet. Der Wert FTT kann in Abhängigkeit von der Art des sicherheitsrelevanten Hinweises verschieden lang gewählt werden, gegebenenfalls auch dynamisch; zum Beispiel für eine falsche Ganganzeige im Bereich von 0,5 Sekunden oder für einen CCM-Hinweis, zu eine offene Kofferraumklappe, ein bis 2 Sekunden.

Folgendes Abfrageschema im Hinblick auf die Farbwertebereiche kann zum Tragen kommen, wobei RGB-Farben zu Grunde gelegt werden:

| | |
|---|---|
| Hintergrund Klasse 51-0: | R < T_{BR}, G < T_{BG}, B < T_{BB} |
| Vordergrund Klasse 51-1: | R > T_{FR}, G > T_{FG}, B > T_{FB} |
| Kantenbereiche Klasse 51-2: | T_{AR-} < R < T_{AR+} |
| | T_{AG-} < G < T_{AG+} |
| | T_{AB-} < B < T_{AB+} |

Dabei können die entsprechenden Schwellenwerte oder Intervallgrenzen je nach Anwendungsfall festgelegt werden.

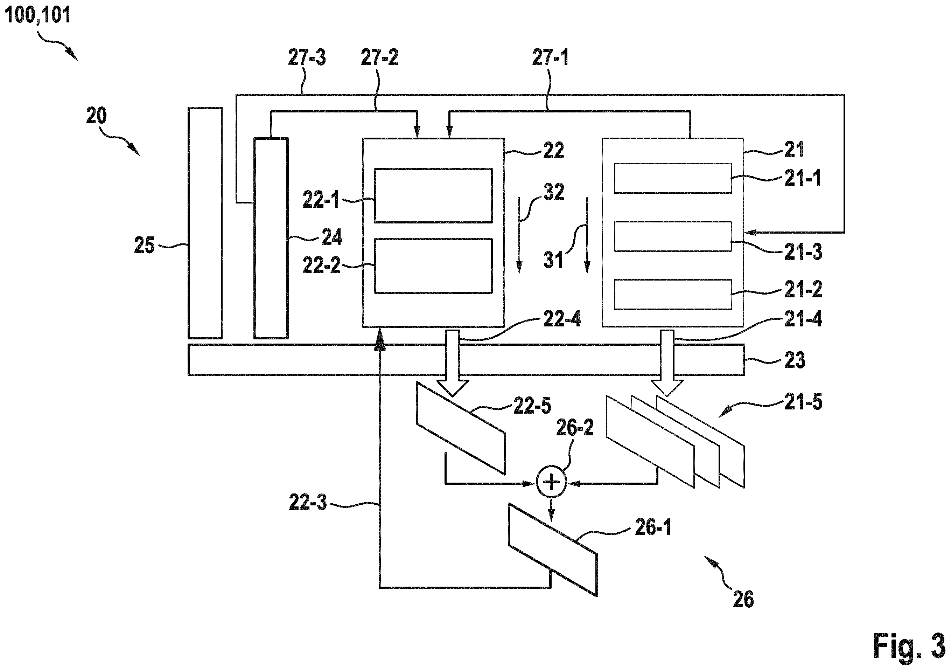

Figur 3 zeigt nach Art eines Blockdiagramms den Aufbau einer erfindungsgemäßen Anzeigeeinheit 20 im Zusammenhang mit einer erfindungsgemäßen Vorrichtung 100, und zwar aufgefasst als Anwenderschnittstelle 101.

Zur Realisierung des normalen Anzeigemodus und des Sicherheitsanzeigemodus werden im Zusammenhang mit einem ersten Adressraum 21 und einem zweiten Adressraum 22 (VAS) eine normale Schnittstelleneinheit 21-1 (HMI) als Menschmaschineschnittstelle, ein Graphikprozessor 21-3 (graphics engine) und ein entsprechender normaler Grafiktreiber 21-2 normal und nicht ASIL-konform bzw. mit einem zweiten Adressraum 22 (VAS) eine Sicherheitsschnittstelleneinheit 22-1 (safety HMI) und einen Sicherheitsgrafiktreiber 22-2 (safety graphics driver) ASIL-konform definiert.

Über diese Adressräume 21 und 22 werden durch Übergabeprozesse 21-4 bzw. 22-4 in gesteuerter Weise einem darzustellenden Hinweis zugeordnete erste bzw. zweite Bilddaten 31 bzw. 32 über einen Grafikkern 23 einer Anzeige 26 mit einer Mehrzahl normaler Schichten 21-5 (non-safety layer) und einer Sicherheitsschicht 22-5 (safety layer) zugeführt. Dabei entsteht über einen Prozess 26-2 des Überblendens und/oder Blittens eine kombinierte Anzeige 26-1, bei welcher das Vorliegen oder Nichtvorliegen einer entsprechenden Fehlerbedingung berücksichtigt wird, wie dies oben im Detail beschrieben wurde.

Figur 3 zeigt den Prozess 22-3 des Rückauslesens (back read) der Anzeige 26, entweder zur Definition der Referenzanzeige 26` und/oder für den Prozess des Vergleichens.

Über entsprechende Schnittstellen 27-1, 27-2, 27-3 sind die Steuerprozesse 21-1 und 22-1 und die entsprechenden geschützten Adressräume 21 und 22 mit weiteren Steuerkomponenten 24 (IPC (grey channel)) und 25 (Betriebssystem) zur Steuerung gekoppelt, wobei die Schnittstelle 27-3 sämtliche Signale überträgt, die Schnittstelle 27-2 dagegen zum Beispiel die so genannten Warnleuchten-, Ganganzeige- und Warnmeldungs-Signale, die insbesondere durch Prüfsummen und Alive-Counter gesichert sind. Die Schnittstelle 27-1 überträgt Position und/oder Größe der Anzeige 26 von der normalen Anzeigeeinheit 21-1 im Zusammenhang mit dem ersten Adressraum 21 an die Sicherheitsanzeigeeinheit 22-1 im Zusammenhang mit dem zweiten Adressraum 22, wobei ebenfalls die Signale für Warnleuchten, die Ganganzeige und Warnmeldungen zum Tragen kommen können.

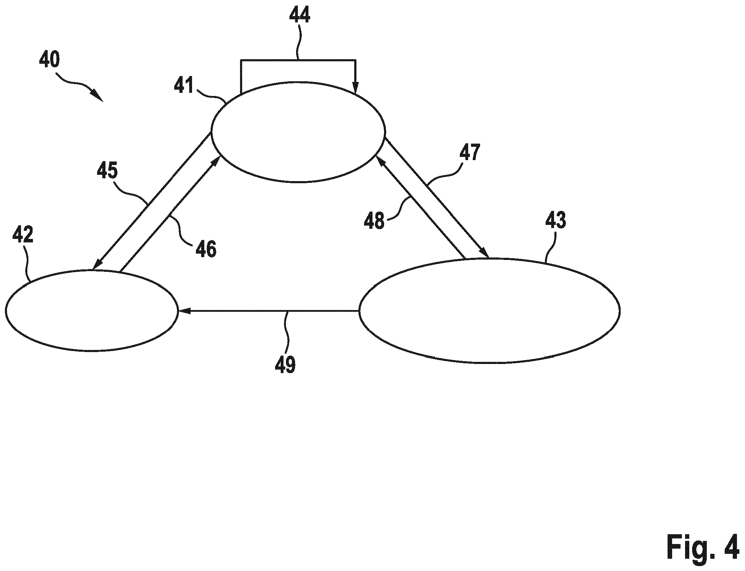

Figur 4 erläutert nach Art eines Blockdiagramms eine Ausführungsform des erfindungsgemäßen Verfahrens im Zusammenhang mit einem Zustandsautomaten 40 (state machine).

Der Zustandsautomat 40 gemäß Figur 4 realisiert den Prozessablauf für die alternative Darstellung der Anzeigen 26 mit den ersten Bilddaten 31 bzw. den zweiten Bilddaten 32 in Abhängigkeit von dem Vorliegen oder Nichtvorliegen einer Fehlerbedingung in der oben beschriebenen Weise.

Der Zustandsautomat 40 gemäß Figur 4 umfasst drei Zustände, nämlich einen ersten oder normalen Zustand 41, einen Sicherheitszustand 42 und einen entarteten Zustand 43 (degraded).

Im Normalzustand 41 kommt die normale Schnittstelleneinheit 21-1 unter Überwachung durch die Sicherheitsschnittstelleneinheit 22-1 zum Einsatz. Dabei wird der Zeitgeber für die Fehlertoleranzzeit FTT zurückgesetzt, sobald die Bildübereinstimmungsprüfung gemäß dem Prozess 44, also der Image-Matcher die Anzeige 26 verifiziert. Im Normalzustand 44 kommen die ersten Bilddaten 31 für den Hinweis an den Anwender zur Anzeige 26.

Beim Sicherheitszustand 42 erfolgt die Anzeige 26 über die Sicherheitsschnittstelle 22-1 unter Verwendung der zweiten Bilddaten 32 zur Darstellung des Hinweises an den Anwender.

Der Übergang vom Normalzustand 41 zum Sicherheitszustand 42 erfolgt gemäß dem Prozess 45 beim Vorliegen kontinuierlich fehlerhafter Eingabesignale über eine Zeitspanne in Weg, die größer ist als die Fehlertoleranzzeit FTT.

Der Übergang vom Sicherheitszustand 42 zurück zum Normalzustand 41 erfolgt gemäß dem Prozess 46 beim Vorliegen korrekter Eingangssignale.

Bei kontinuierlicher fehlender Übereinstimmung während einer Zeitspanne, die länger ist als die Fehlertoleranzzeit FTT, erfolgt der Übergang 47 zum entarteten Zustand 43. Von diesem ist eine Rückkehr 48 zum Normalzustand 41 unter verschiedenen Bedingungen möglich, darunter eine Bild Übereinstimmung für eine bestimmte Anzahl von Bildern oder Rahmen und/oder beim Vorliegen einer Signaländerung.

Ein Übergang 49 vom entarteten Zustand 43 zum Sicherheitszustand 42 ist beim kontinuierlichen Vorliegen fehlerhafter Eingangssignale während einer Zeitspanne, die größer ist als die Fehlertoleranzzeit FTT, möglich.

Diese und weitere Merkmale und Eigenschaften der vorliegenden Erfindung werden an Hand der folgenden Darlegungen weiter erläutert:
Die vorliegende Erfindung baut auf verschiedenen Sicherheitsanzeigekonzepten auf, welche der hier vorliegenden Erfindung als Grundlage dienen und bei welchen es insbesondere um die zuverlässige Darstellung sicherheitstechnisch relevanter Hinweise in komplexen informationstechnischen Apparaturen geht.

Diese Idee wird durch die vorliegende Erfindung erweitert, um insbesondere die nachfolgend aufgelisteten Nachteile des bisherigen Vorgehens zu vermeiden:
- Es liegt ein sehr eingeschränktes, vorherbestimmtes Design der Anzeige von Inhalten vor.
- Es sind keine Animationen der Darstellung möglich.
- Die derzeitigen Methoden, die auf einer Überprüfung des Anzeigeinhalts mittels Checksummen beruhen, verlangen ein zu 100% vorbestimmtes Bild. Jegliche Abweichungen, z.B. ein anderer Hintergrund, Licht- oder Schatteneffekte, würden als Fehler erkannt werden. Das herkömmliche Vorgehen ist somit unflexibel und störanfällig.
- Die derzeitige Methode zeigt ein vorgerendertes Bild an. Es sind keine Animationen, Licht-/Schatteneffekte, Änderungen des Hintergrunds oder dergleichen möglich und es ergibt sich eine schlechte Integration der sicherheitsrelevanten Inhalte in die Gesamtszene mit insgesamt starken Designeinschränkungen.
- Bei Störungen in der Anzeigeoberfläche ergibt sich auch eine gestörte oder entfallende Anzeige von Informationen und/oder Hinweisen.

Eine Grundidee der vorliegenden Erfindung ist die dauerhafte Absicherung der korrekten Darstellung von sicherheitsrelevanten Hinweisen und Informationen innerhalb einer Szene, die durch eine nicht nach ASIL B entwickelten Menschmaschineschnittstelle oder HMI (HMI: Human-Machine-Interface, Menschmaschineschnittstelle) dargestellt wird und die einen höheren Grad an Flexibilität der Darstellung erlaubt.

Essentiell für diese Idee ist die Einführung einer die Darstellung oder Anzeige 26 absichernden Sicherheitsschnittstelle 22-1, die auch als Safety-HMI bezeichnet wird und mit der Absicherungsklasse ASIL B verbunden ist.

Diese Safety-HMI 22-1 gleicht fortlaufend die Anzeige 26 der sicherheitsrelevanten Hinweise einer nicht abgesicherten und somit normalen Schnittstelle 21-1 ab, die auch als Non-Safety-Layer oder normale HMI bezeichnet wird, und zwar indem der Anzeigebildspeicher, auch Display-Frame-Buffer genannt, der normalen Anzeigeschicht 21-5, die auch als Non-Safety-Layer bezeichnet wird, also der Bildspeicher der aktuellen Anzeige 26 oder aktuellen Darstellung auf der Anzeige 26 - insbesondere per back-read 22-3 - ausgelesen und mit Referenzanzeigen 26' oder Referenzbildern verglichen wird.

Die dafür notwendige Vergleichseinrichtung - zum Beispiel ein so genannter Image-Matcher oder IM 44 - ist ein Aspekt der vorliegenden Erfindung und beinhaltet aber auf jeden Fall spezifische Anforderungen für einen Referenzbildvergleich.

Dabei werden Position und/oder Größe der sicherheitsrelevanten Anzeigeregionen von der normalen Schnittstelle 21-1 oder HMI vorgegeben.

Die Referenzanzeigen 26' oder Referenzbilder sind in der Safety-HMI 22-1 abgespeichert und die einzelnen Pixel 51 oder Bildkomponenten in verschiedene Bereiche oder Klassen 51-0 bis 51-3 unterteilt, insbesondere in Vordergrund 51-1, Hintergrund 51-0, Antialiasingregionen 51-2 sowie in irrelevante oder dontcare-Regionen gemäß der Klasse 51-3.

Für jede dieser Gruppen oder Klassen 51-0 bis 51-3 gibt es vorbestimmte Bildfehlerschwellenwerte und insbesondere Farbschwellenwerte.

Der Image-Matcher IM, 44 prüft für jedes Pixel 51, ob seine Farbe innerhalb eines vorbestimmten Bereichs liegt, so dass eine gewisse Abweichung von der eigentlichen Farbgebung toleriert werden kann.

Weiterhin ist es möglich, einen bestimmten Schwellenwert für die maximal tolerierte Anzahl an fehlerhaften Pixeln festzulegen, ab welchem die Sicherheitsschnittstelle 22-1 oder Safety-HMI die Darstellung oder Anzeige 26 der sicherheitsrelevanten Information übernimmt.

Die tolerierte Anzahl an Pixelfehlern kann z.B. bildgrößenabhängig festgelegt werden.

Sofern die Anzeige 26 der Informationen auf dem normalen HMI-Layer 21-5, z.B. im Zusammenhang mit einem zweiten virtuellen Adressraum (virtual address space VAS 1, fehlerfrei bzw. fast fehlerfrei erfolgt und also Pixelfehleranzahl unterhalb des Schwellenwerts liegt, bleibt die Anzeige 26 durch die oder der der Sicherheitsschnittstelle 22-1 oder Safety-HMI verborgen und die Anzeige 26 erfolgt über die normale Schnittstelle 21-1 oder non-Safety-HMI.

Wird der Schwellenwert überschritten, übernimmt die Sicherheitsschnittstelle 22-1 oder Safety-HMI die Darstellung oder Anzeige 26 der sicherheitsrelevanten Information im fehlerhaften Bereich, insbesondere auf dem Safety-Layer 22-5.

Dabei wird eine Bitmap von der Sicherheitsschnittstelle 22-1 oder Safety-HMI auf das oberste Anzeigegrafiklayer oder Safety-Layer 22-5 mit einem Prozess 26-2 geblittet und somit der fehlerhafte Inhalt des normalen Schnittstelle 21-1 oder des normalen HMI-Layers 21-5 überblendet, so dass die Information wieder korrekt angezeigt wird.

Das Auslesen 22-3 der Darstellung durch die Anzeige 26, also der so genannte Back-Read zum Pixelabgleich, erfolgt kontinuierlich mit einem festen Zeitintervall. Somit ist es möglich, im normalen HMI-Layer 21-5 Animationen einzublenden, sofern die Dauer dieser Animationen kürzer ist als die Fehlertoleranzzeit oder Fault-Tolerance-Time vom Back-Read, die auch mit FTT bezeichnet wird.

Obwohl während der Animation die Darstellung des normalen HMI-Layers 21-5 nicht mit der Referenzanzeige 26` oder dem Referenzbild übereinstimmt, wird nicht sofort das Safety-Layer 22-5 aktiviert, da die Fault-Tolerance-Time oder FTT noch nicht überschritten wurde.

Dies kann zum Beispiel bei der Darstellung des momentanen Gangs angewendet werden:
Im Normalfall kann beim Hoch- oder Runterschalten des Gangs eine Animation - z.B. ein Rollen - gezeigt werden. Während der Animation kommt es zu Bildvergleichsfehlern, die aber nicht zu einer Reaktion durch die Safety-HMI 22-1 führen, da die Animation vor Ablauf der FFT abgeschlossen ist und damit wieder ein gültiges, fehlerfreies Bild vorliegt.

Sollte nun allerdings ein falscher Gang angezeigt werden - z.B. beim Fahrzeug 1 mit Vorwärtsbetrieb die dauerhafte Anzeige eines Rückwärtsgangs - wird nach Ablauf der FTT festgestellt, dass die Darstellung nicht mehr mit der Referenzanzeige 26' oder mit dem Referenzbild aus dem Safety-Layer 22-5 übereinstimmt. Daraufhin übernimmt das Safety-HMI 22-1 die Darstellung oder Anzeige 26 des Gangs. Die Möglichkeit der animierten Anzeige entfällt dann.

Das Safety-Layer 22-5 und dessen Referenzbilder können z.B. weniger Farbwerte als die normale HMI-Anzeige umfassen und verbrauchen dementsprechend verhältnismäßig wenig Speicherkapazität. Daraus ergibt sich zwar eine weniger ansprechende Darstellung oder Anzeige 26 der Information, die allerdings lediglich für Anzeige im Notfall gedacht ist und keinen Dauerzustand darstellen soll.

Ein Referenzbild hat zum Beispiel zwei Bits pro Pixel, die Farbe und die Schwellenwerte sind pro Bitmap gespeichert.

Die Datenkomprimierung kann per Run-Length-Encoding (RLE) erfolgen.

Alle Antialiasingpixel - also Pixel 51 der Klasse 51-2 - können dieselbe und insbesondere "mittlere" Farbe aufweisen, die definiert ist durch die Vorschrift: (Vordergrundfarbe + Hintergrundfarbe) / 2.

Die Betriebszustände oder Betriebsmodi der Sicherheitsschnittstelle oder Safety-HMI 22-1 (Gen2) bestehen zum Beispiel aus einzelnen Zustandsautomaten 40, und zwar für jede anzuzeigende Fahrzeugfunktion, z.B. Check-Control-Symbol, Telltales (Kontroll-Leuchten), GearSpa usw., mit Zuständen 41, 42, 43, wie dies im Zusammenhang mit Figur 4 angedeutet ist.

Das heißt, für jede Fahrzeugfunktion gibt es eine normale Darstellung in der normalen HMI 21-1 und ein spezifisches Referenzbild 26`, welches nur im Fehlerfall der betreffenden Fahrzeugfunktion aktiviert wird, während die anderen, fehlerfreien Funktionen weiterhin von der normalen HMI 21-1 dargestellt werden.

Es können unter anderem folgende Vorteile mit der vorliegenden Erfindung erreicht werden:
- Sicherheitsrelevanter Inhalt kann animiert dargestellt werden.
- Sicherheitsrelevanter Inhalt kann mit verschiedenen Hintergrunddarstellungen hinterlegt oder unterlegt werden.
- Der sicherheitsrelevante Inhalt besitzt nicht notwendigerweise einen rechteckigen Rahmen.
- Referenzbilder sind wesentlich kleiner als vollfarbige Bitmaps, ein geringerer Speicherplatzverbrauch stellt sich ein.
- Der Bildabgleich toleriert gewisse Abweichungen in der Farbgebung und Pixelfehler.
- Referenzbilder werden nur im Fehlerfall dargestellt.

### Bezugszeichenliste:

- 1: Fahrzeug, Arbeitsvorrichtung
- 2: Karosserie
- 4: Rad

- 10: Erfassungs- und Steuereinheit
- 11: Steuerleitung
- 20: Anzeigeeinheit
- 21: (erster) Adressraum VAS 1, nicht konform nach ASIL B
- 21-1: normale Schnittstelleneinheit
- 21-2: normaler Grafiktreiber
- 21-3: Graphikprozessor
- 21-4: Datenübergabe
- 21-5: Anzeigeschicht (non-safety layer)
- 22: (zweiter) Adressraum VAS 2 - konform nach ASIL B
- 22-1: Sicherheitsschnittstelleneinheit
- 22-2: Sicherheitsgrafiktreiber
- 22-3: Rückausleseprozess
- 22-4: Datenübergabe
- 22-5: Sicherheitsschicht (safety layer)
- 23: Grafikkern
- 24: Prozess/Einheit gemäß IPC (Grey Channel)
- 25: Prozess/Einheit gemäß Integrity OS (ASIL B)
- 26: Anzeige
- 26': Referenzanzeige
- 26-1: kombinierte Anzeige
- 26-2: Blitten und/oder Blenden
- 27-1: Verbindung, Steuerleitung
- 27-2: Verbindung, Steuerleitung
- 27-3: Verbindung, Steuerleitung
- 30: Speichereinheit
- 31: (erste) Bilddaten
- 32: (zweite) Bilddaten

- 40: Zustandsautomat
- 41: Normalzustand
- 42: Sicherheitszustand
- 43: entarteter Zustand
- 44: Bildübereinstimmungsprüfung
- 45-49: Übergang

- 50: Bildbereich
- 51: Pixel, Bildelement
- 51-0: Klasse Hintergrund
- 51-1: Klasse Vordergrund
- 51-2: Klasse Kantenbereich
- 51-3: Klasse irrelevant

- 100: Anzeigevorrichtung
- 101: Schnittstelle

## Patentansprüche

1. Verfahren zum Anzeigen eines Hinweises für einen Anwender, bei welchem:
- in einem ersten oder normalen Anzeigemodus dem Hinweis zugeordnete erste Bilddaten (31) auf einer Anzeigeeinheit (20) angezeigt werden,
- in einem zweiten oder Sicherheitsanzeigemodus dem Hinweis zugeordnete zweite Bilddaten (32) auf einer und insbesondere derselben Anzeigeeinheit (20) angezeigt werden, sobald im normalen Anzeigemodus eine vorbestimmte Fehlerbedingung erfüllt ist,
- die Erfüllung der vorbestimmten Fehlerbedingung geprüft wird, indem eine aktuelle Anzeige (26) der ersten Bilddaten (31) durch die Anzeigeeinheit (20) im normalen Anzeigemodus auf das Vorliegen von Bildfehlern mit einer Referenzanzeige (26`) der ersten Bilddaten (31) durch die Anzeigeeinheit (20) im normalen Anzeigemodus verglichen wird, und
- zum Vergleichen die aktuelle Anzeige (26) und die Referenzanzeige (26`) in Bereiche und/oder Pixel (51) unterteilt werden,
**dadurch gekennzeichnet, dass**
- die Bereiche und/oder Pixel (51) Klassen (51-0, ..., 51-1) als Hintergrund (51-0), Vordergrund (51-1), Bildkante (51-2) und irrelevant (51-3) zugeordnet werden,
- für jede Klasse (51-0, ..., 51-1) Farbwertintervalle und/oder Farbschwellenwerte festgelegt werden, insbesondere auf der Grundlage eines RGB-Schemas,
- für jeden Bereich und/oder für jedes Pixel (51) und für jede Klasse (51-0, ..., 51-1) eine Lage innerhalb oder außerhalb der Farbwertintervalle und/oder Farbschwellenwerte ermittelt wird,
- bei einer Lage außerhalb der Farbwertintervalle und/oder Farbschwellenwerte auf einen Bildfehler erkannt wird und
- Bereiche und/oder Pixel (51), die als irrelevant klassifiziert sind, vom Vergleich ausgeschlossen sind oder werden.

2. Verfahren nach Anspruch 1, bei welchem das Vergleichen mit der Referenzanzeige (26`) erfolgt, indem der aktuelle Inhalt eines Bildspeichers (30) der Anzeigeeinheit (20) zur aktuellen Anzeige (26) ausgelesen und mit dem Inhalt des Bildspeichers (30) der Anzeigeeinheit (20) zur Referenzanzeige (26`) verglichen wird.

3. Verfahren nach Anspruch 1 oder 2, bei welchem
- die vorbestimmte Fehlerbedingung erfüllt ist, wenn die Anzahl der Bildfehler der aktuellen Anzeige (26) im Vergleich zur jeweiligen Referenzanzeige (26`) einen vorgegebenen Schwellenwert überschreitet, insbesondere für eine vorbestimmte Mindestzeitspanne,
- der Schwellenwert und/oder die Mindestzeitspanne dynamisch und/oder in Abhängigkeit vom Hinweis und/oder dessen Kontext, von den ersten Bilddaten (31), von einer Anzeigeposition und/oder von der Anzeigeeinheit (20) festgelegt sind oder werden.

4. Verfahren nach einem der vorangehenden Ansprüche, bei welchem ein Wechseln zwischen dem normalen Anzeigemodus und dem Sicherheitsanzeigemodus erfolgt durch bereichsweises oder vollständiges Überblenden zwischen den Anzeigen (26) der ersten und der zweiten Bilddaten (31, 32), insbesondere auf einer normalen Anzeigeschicht oder -schnittstelle (21-5) bzw. einer Sicherheitsanzeigeschicht oder -schnittstelle (22-5) und/oder nach Art einer kombinierten Anzeige (26-1).

5. Verfahren nach einem der vorangehenden Ansprüche, bei welchem die ersten Bilddaten (31) für den normalen Anzeigemodus eine höhere graphische und/oder Bildkomplexität aufweisen als die zweiten Bilddaten (32) für den Sicherheitsanzeigemodus, insbesondere hinsichtlich der Farbwerte und/oder der Weite der jeweiligen Wertebereiche der Farbwerte.

6. Verfahren nach einem der vorangehenden Ansprüche, bei welchem der normale Anzeigemodus im Zusammenhang mit einer normalen Grafikschnittstelle (21-1) und der Sicherheitsanzeigemodus über eine Sicherheitsschnittstelle (22-1) realisiert werden, wobei Referenzanzeigen (26`) in der oder im Zusammenhang mit der Sicherheitsschnittstelle (22-1) generiert und/oder gespeichert werden.

7. Verfahren nach einem der vorangehenden Ansprüche, bei welchem Größe und/oder Position einer oder mehrerer Anzeigeregionen einer Anzeige (26) vom oder im Zusammenhang mit dem normalen Anzeigemodus und insbesondere von der oder im Zusammenhang mit der normalen Grafikschnittstelle (21-1) festgelegt werden.

8. Verfahren nach einem der vorangehenden Ansprüche, bei welchem als Hinweis sicherheitsrelevante Informationen in Bezug auf den Betrieb einer zu Grunde liegenden Arbeitsvorrichtung und insbesondere eines Fahrzeugs (1) angezeigt werden und insbesondere im Zusammenhang mit einem Betriebs- oder Fahrmodus, einer Normalfunktion und/oder einer Fehlfunktion einer Komponente und/oder einem Betriebs- oder Fahrparameter.

9. Vorrichtung (100) zum Anzeigen eines Hinweises, mit:
- einer Anzeigeeinheit (20), welche zum gesteuerten Anzeigen des Hinweises ausgebildet ist, und
- einer Steuereinrichtung (10) zum Steuern der Anzeige der oder durch die Anzeigeeinheit (20),
wobei die Steuereinrichtung (10) eingerichtet und ausgebildet ist zu bewirken:
- dass in einem ersten oder normalen Anzeigemodus dem Hinweis zugeordnete erste Bilddaten (31) auf der Anzeigeeinheit (20) angezeigt werden,
- dass in einem zweiten oder Sicherheitsanzeigemodus dem Hinweis zugeordnete zweite Bilddaten (32) auf einer und insbesondere derselben Anzeigeeinheit (20) angezeigt werden, sobald im normalen Anzeigemodus eine vorbestimmte Fehlerbedingung erfüllt ist,
- dass die Erfüllung der vorbestimmten Fehlerbedingung geprüft wird, indem eine aktuelle Anzeige (26) der ersten Bilddaten (31) durch die Anzeigeeinheit (20) im normalen Anzeigemodus auf das Vorliegen von Bildfehlern mit einer Referenzanzeige (26`) der ersten Bilddaten (31) durch die Anzeigeeinheit (20) im normalen Anzeigemodus verglichen wird, und
- dass zum Vergleichen die aktuelle Anzeige (26) und die Referenzanzeige (26`) in Bereiche und/oder Pixel (51) unterteilt werden,
**dadurch gekennzeichnet, dass** die Steuereinrichtung (10) weiter eingerichtet und ausgebildet ist zu bewirken,
- dass die Bereiche und/oder Pixel (51) Klassen (51-0, ..., 51-1) als Hintergrund (51-0), Vordergrund (51-1), Bildkante (51-2) und irrelevant (51-3) zugeordnet werden,
- dass für jede Klasse (51-0, ..., 51-1) Farbwertintervalle und/oder Farbschwellenwerte festgelegt werden, insbesondere auf der Grundlage eines RGB-Schemas,
- dass für jeden Bereich und/oder für jedes Pixel (51) und für jede Klasse (51-0, ..., 51-1) eine Lage innerhalb oder außerhalb der Farbwertintervalle und/oder Farbschwellenwerte ermittelt wird,
- dass bei einer Lage außerhalb der Farbwertintervalle und/oder Farbschwellenwerte auf einen Bildfehler erkannt wird und
- dass Bereiche und/oder Pixel (51), die als irrelevant klassifiziert sind, vom Vergleich ausgeschlossen sind oder werden.

10. Arbeitsvorrichtung und insbesondere Fahrzeug (1), welche mit einer Vorrichtung (100) zum Anzeigen eines Hinweises nach Anspruch 9 ausgebildet ist.

## Claims

1. Method for displaying a notification for a user, wherein:
- first image data (31) associated with the notification are displayed on a display unit (20) in a first or normal display mode,
- second image data (32) associated with the notification are displayed on a display unit (20), in particular on the same display unit, in a second or safety display mode as soon as a predetermined fault condition is satisfied in the normal display mode,
- the predetermined fault condition being satisfied is checked by virtue of a current display (26) of the first image data (31) by the display unit (20) in the normal display mode being compared, in respect of the presence of image artefacts, with a reference display (26') of the first image data (31) by the display unit (20) in the normal display mode, and
- the current display (26) and the reference display (26') are subdivided into regions and/or pixels (51) for comparison purposes,
**characterized in that**
- the regions and/or pixels (51) are associated with classes (51-0, ..., 51-1) as background (51-0), foreground (51-1), image edge (51-2) and irrelevant (51-3),
- colour value intervals and/or colour thresholds are set for each class (51-0, ..., 51-1), in particular on the basis of an RGB scheme,
- a position within or outside of the colour value intervals and/or colour thresholds is established for each region and/or for each pixel (51) and for each class (51-0, ..., 51-1),
- an image artefact is identified in the case of a position outside of the colour value intervals and/or colour thresholds, and
- regions and/or pixels (51) that are classified as irrelevant are excluded from the comparison.

2. Method according to Claim 1, wherein the comparison with the reference display (26') is implemented by virtue of the current content of an image memory (30) of the display unit (20) in respect of the current display (26) being read and compared to the content of the image memory (30) of the display unit (20) in respect of the reference display (26').

3. Method according to Claim 1 or 2, wherein
- the predetermined fault condition is satisfied if the number of image artefacts of the current display (26) exceeds a predetermined threshold in comparison with the respective reference display (26'), in particular for a predetermined minimum time interval,
- the threshold and/or the minimum time interval are set dynamically and/or depending on the notification and/or the context thereof, the first image data (31), a display position and/or the display unit (20).

4. Method according to any one of the preceding claims, wherein a change between the normal display mode and the safety display mode is implemented by an overlay, in certain regions or everywhere, of the displays (26) of the first and the second image data (31, 32), in particular on a normal display layer or normal display interface (21-5) or a safety display layer or safety display interface (22-5) and/or in the style of a combined display (26-1).

5. Method according to any one of the preceding claims, wherein the first image data (31) for the normal display mode have greater graphics and/or image complexity than the second image data (32) for the safety display mode, in particular in respect of the colour values and/or the breadth of the respective value ranges of the colour values.

6. Method according to any one of the preceding claims, wherein the normal display mode is realized in conjunction with a normal graphics interface (21-1) and the safety display mode is realized by way of a safety interface (22-1), wherein reference displays (26') are generated and/or stored in, or in conjunction with, the safety interface (22-1).

7. Method according to any one of the preceding claims, wherein the size and/or position of one or more display regions of a display (26) are set by the normal display mode or in conjunction therewith and, in particular, by the normal graphics interface (21-1) or in conjunction therewith.

8. Method according to any one of the preceding claims, wherein safety-relevant information items in relation to the operation of an underlying work apparatus and, in particular, of a vehicle (1) are displayed as notification, and in particular in conjunction with an operating or driving mode, a normal function and/or a malfunction of a component and/or an operating or driving parameter.

9. Apparatus (100) for displaying a notification, comprising:
- a display unit (20) that is embodied for the controlled display of the notification and
- a control device (10) for controlling the display of the or by way of the display unit (20),
wherein the control device (10) is configured and designed to bring about the following:
- first image data (31) associated with the notification are displayed on the display unit (20) in a first or normal display mode,
- second image data (32) associated with the notification are displayed on a display unit (20), in particular on the same display unit, in a second or safety display mode as soon as a predetermined fault condition is satisfied in the normal display mode,
- the predetermined fault condition being satisfied is checked by virtue of a current display (26) of the first image data (31) by the display unit (20) in the normal display mode being compared, in respect of the presence of image artefacts, with a reference display (26') of the first image data (31) by the display unit (20) in the normal display mode, and
- the current display (26) and the reference display (26') are subdivided into regions and/or pixels (51) for comparison purposes,
**characterized in that** the control device (10) is further configured and designed to bring about the following:
- the regions and/or pixels (51) are associated with classes (51-0, ..., 51-1) as background (51-0), foreground (51-1), image edge (51-2) and irrelevant (51-3),
- colour value intervals and/or colour thresholds are set for each class (51-0, ..., 51-1), in particular on the basis of an RGB scheme,
- a position within or outside of the colour value intervals and/or colour thresholds is established for each region and/or for each pixel (51) and for each class (51-0, ..., 51-1),
- an image artefact is identified in the case of a position outside of the colour value intervals and/or colour thresholds, and
- regions and/or pixels (51) that are classified as irrelevant are excluded from the comparison.

10. Work apparatus and in particular vehicle (1), which is embodied with an apparatus (100) for displaying a notification according to Claim 9.

## Revendications

1. Procédé d'affichage d'une notification pour un utilisateur, avec lequel :
- dans un premier mode d'affichage, ou mode normal, des premières données d'image (31) associées à la notification sont affichées sur une unité d'affichage (20),
- dans un deuxième mode d'affichage, ou mode de sécurité, des deuxièmes données d'image (32) associées à la notification sont affichées sur une, et notamment la même, unité d'affichage (20) dès qu'une condition d'erreur prédéterminée est satisfaire dans le mode d'affichage normal,
- la satisfaction de la condition d'erreur prédéterminée est vérifiée en comparant un affichage actuel (26) des premières données d'image (31) par l'unité d'affichage (20) dans le mode d'affichage normal avec un affichage de référence (26') des premières données d'image (31) par l'unité d'affichage (20) dans le mode d'affichage normal en vue de la présence d'erreurs d'image, et
- pour la comparaison, l'affichage actuel (26) et l'affichage de référence (26') sont subdivisés en zones et/ou en pixels (51),
**caractérisé en ce que**
- des classes (51-0, ..., 51-1) sont associées aux zones et/ou aux pixels (51) en tant qu'arrière-plan (51-0), premier plan (51-1), bord d'image (51-2) et sans objet (51-3),
- des intervalles de valeur de couleur et/ou des valeurs de seuil de couleur sont spécifiés pour chaque classe (51-0, ..., 51-1), notamment sur la base d'un schéma RVB,
- une position à l'intérieur ou à l'extérieur des intervalles de valeur de couleur et/ou des valeurs de seuil de couleur est déterminée pour chaque zone et/ou pour chaque pixel (51) et pour chaque classe (51-0, ..., 51-1),
- une erreur d'image est reconnue dans le cas d'une position à l'extérieur des intervalles de valeur de couleur et/ou des valeurs de seuil de couleur et
- les zones et/ou les pixels (51) qui sont classifiés sans objet sont ou seront exclus de la comparaison.

2. Procédé selon la revendication 1, avec lequel la comparaison avec l'affichage de référence (26') s'effectue en lisant le contenu actuel d'une mémoire d'images (30) de l'unité d'affichage (20) pour l'affichage actuel (26) et en le comparant avec le contenu de la mémoire d'images (30) de l'unité d'affichage (20) pour l'affichage de référence (26').

3. Procédé selon la revendication 1 ou 2, avec lequel
- la condition d'erreur prédéterminée est satisfaite lorsque le nombre d'erreurs d'image de l'affichage actuel (26) en comparaison de l'affichage de référence (26') dépasse une valeur de seuil prédéfinie, notamment pendant une période minimale prédéterminée,
- la valeur de seuil et/ou la période minimale sont ou seront spécifiées dynamiquement et/ou en fonction de la notification et/ou de son contexte, par les premières données d'image (31), par une position d'affichage et/ou par l'unité d'affichage (20).

4. Procédé selon l'une des revendications précédentes, avec lequel un changement entre le mode d'affichage normal et la mode d'affichage de sécurité s'effectue par un fondu par zones ou complet entre les affichages (26) des premières et des deuxièmes données d'image (31, 32), notamment sur une couche ou une interface d'affichage normale (21-5) ou une couche ou une interface d'affichage de sécurité (22-5) et/ou à la manière d'un affichage combiné (26-1).

5. Procédé selon l'une des revendications précédentes, avec lequel les premières données d'image (31) pour le mode d'affichage normal présentent une complexité graphique et/ou d'image supérieure aux deuxièmes données d'image (32) pour le mode d'affichage de sécurité, notamment pour ce qui concerne les valeurs de couleur et/ou la largeur des plages de valeurs respectives des valeurs de couleur.

6. Procédé selon l'une des revendications précédentes, avec lequel le mode d'affichage normal est réalisé en association avec une interface graphique normale (21-1) et le mode d'affichage de sécurité par le biais d'une interface de sécurité (22-1), des affichages de référence (26') étant générés et/ou mémorisés en association avec l'interface de sécurité (22-1).

7. Procédé selon l'une des revendications précédentes, avec lequel la taille et/ou la position d'une ou de plusieurs régions d'affichage d'un affichage (26) sont spécifiées par ou en association avec le mode d'affichage normal et notamment par ou en association avec l'interface graphique normale (21-1).

8. Procédé selon l'une des revendications précédentes, avec lequel la notification affichée est des informations relatives à la sécurité en rapport avec le fonctionnement d'un arrangement de travail sous-jacent, et notamment d'un véhicule (1), et notamment en association avec un mode de fonctionnement ou de déplacement, une fonction normale et/ou une fonction erronée d'un composant et/ou un paramètre de fonctionnement ou de déplacement.

9. Arrangement (100) destiné à afficher une notification, comprenant :
- une unité d'affichage (20), qui est configurée pour l'affichage commande de la notification, et
- un dispositif de commande (10) destiné à commander l'affichage de la ou par l'unité d'affichage (20),
le dispositif de commande (10) étant conçu et configuré pour avoir pour effet :
- que dans un premier mode d'affichage, ou mode normal, des premières données d'image (31) associées à la notification sont affichées sur l'unité d'affichage (20),
- que dans un deuxième mode d'affichage, ou mode de sécurité, des deuxièmes données d'image (32) associées à la notification sont affichées sur une, et notamment la même, unité d'affichage (20) dès qu'une condition d'erreur prédéterminée est satisfaire dans le mode d'affichage normal,
- que la satisfaction de la condition d'erreur prédéterminée est vérifiée en comparant un affichage actuel (26) des premières données d'image (31) par l'unité d'affichage (20) dans le mode d'affichage normal avec un affichage de référence (26') des premières données d'image (31) par l'unité d'affichage (20) dans le mode d'affichage normal en vue de la présence d'erreurs d'image, et
- que pour la comparaison, l'affichage actuel (26) et l'affichage de référence (26') sont subdivisés en zones et/ou en pixels (51),
**caractérisé en ce que** le dispositif de commande (10) est en outre conçu et configuré pour avoir pour effet :
- que des classes (51-0, ..., 51-1) sont associées aux zones et/ou aux pixels (51) en tant qu'arrière-plan (51-0), premier plan (51-1), bord d'image (51-2) et sans objet (51-3),
- que des intervalles de valeur de couleur et/ou des valeurs de seuil de couleur sont spécifiés pour chaque classe (51-0, ..., 51-1), notamment sur la base d'un schéma RVB,
- qu'une position à l'intérieur ou à l'extérieur des intervalles de valeur de couleur et/ou des valeurs de seuil de couleur est déterminée pour chaque zone et/ou pour chaque pixel (51) et pour chaque classe (51-0, ..., 51-1),
- qu'une erreur d'image est reconnue dans le cas d'une position à l'extérieur des intervalles de valeur de couleur et/ou des valeurs de seuil de couleur et
- que les zones et/ou les pixels (51) qui sont classifiés sans objet sont ou seront exclus de la comparaison.

10. Arrangement de travail et notamment véhicule (1), qui est configuré avec un arrangement (100) destiné à afficher une notification selon la revendication 9.
